(19) **Europäisches Patentamt / European Patent Office / Office européen des brevets**

(11) **EP 4 189 380 B1**

(12) **FASCICULE DE BREVET EUROPEEN**

(45) Date de publication et mention de la délivrance du brevet:
**22.05.2024 Bulletin 2024/21**

(21) Numéro de dépôt: **21745368.7**

(22) Date de dépôt: **28.06.2021**

(51) Classification Internationale des Brevets (IPC):
**G01N 29/06** (2006.01)   **G01N 29/07** (2006.01)
**G01N 29/11** (2006.01)   **G01N 29/34** (2006.01)
**G01N 29/04** (2006.01)   **G01N 29/26** (2006.01)

(52) Classification Coopérative des Brevets (CPC):
**G01N 29/262; G01N 29/043; G01N 29/069;**
**G01N 29/07; G01N 29/11; G01N 29/343;**
G01N 2291/011; G01N 2291/015; G01N 2291/023;
G01N 2291/044; G01N 2291/106

(86) Numéro de dépôt international:
**PCT/FR2021/051187**

(87) Numéro de publication internationale:
**WO 2022/023632 (03.02.2022 Gazette 2022/05)**

(54) **PROCÉDÉ DE DÉTECTION DE DISCONTINUITÉS ET SYSTÈME METTANT EN OEUVRE CE PROCÉDÉ**

VERFAHREN ZUR ERKENNUNG VON DISKONTINUITÄTEN UND SYSTEM ZUR IMPLEMENTIERUNG DIESES VERFAHRENS

METHOD FOR DETECTING DISCONTINUITIES AND SYSTEM FOR IMPLEMENTING SAID METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.07.2020 FR 2008097**

(43) Date de publication de la demande:
**07.06.2023 Bulletin 2023/23**

(73) Titulaire: **Socomate International**
**77580 Crecy La Chapelle (FR)**

(72) Inventeurs:
- **COPERET, Philippe**
  **77580 CRECY LA CHAPELLE (FR)**
- **CAMUS, Liévin**
  **77580 CRECY LA CHAPELLE (FR)**
- **CARPEZA, Jean-Marc**
  **77580 CRECY LA CHAPELLE (FR)**

(74) Mandataire: **Plasseraud IP**
**66, rue de la Chaussée d'Antin**
**75440 Paris Cedex 09 (FR)**

(56) Documents cités:
- **DAVIDSEN RICHARD E. ET AL: "Two-dimensional random arrays for real time volumetric imaging", ULTRASONIC IMAGING, vol. 16, 1 janvier 1994 (1994-01-01), pages 143-163, XP055786494,**
- **PIETER KRUIZINGA ET AL: "Compressive 3D ultrasound imaging using a single sensor", SCIENCE ADVANCES, vol. 3, no. 12, 1 décembre 2017 (2017-12-01), page e1701423, XP055594656, DOI: 10.1126/sciadv.1701423**
- **RACHLIN D J ET AL: "Theoretical evaluation of some related methods for reducing acoustic speckle", 19881002; 19881002 - 19881005, 2 octobre 1988 (1988-10-02), pages 827-832, XP010075565,**
- **"Post-processing of the full matrix of ultrasonic transmit-receive array data for non-destructive évaluation", NDT&E INTERNATIONAL, vol. 38, 2005, pages 701-711, XP002802391, cité dans la demande**

EP 4 189 380 B1

**Description**

**DOMAINE TECHNIQUE**

La présente invention est relative à un procédé de détection de discontinuité dans un produit, notamment en utilisant un sondage par ondes ultrasonores.

**ETAT DE LA TECHNIQUE ANTERIEURE**

Il existe de nombreuses techniques pour détecter des discontinuités ou défauts dans un produit, et par exemple un produit métallique. Ces techniques sont du domaine du contrôle non destructif. Les techniques utilisant la propagation des ondes ultrasonores sont très efficaces pour détecter des discontinuités ou défauts dans le matériau du produit après sa fabrication ou au cours de sa durée de vie pour assurer son bon fonctionnement.

Ainsi, le document de brevet FR 2 830 328 montre un procédé de détection de discontinuités utilisant plusieurs faisceaux simultanément dans plusieurs directions, mais un tel procédé génère des interférences en réceptions, et le rapport signal sur bruit est dégradé par rapport à un procédé mono faisceau.

Le document « Post-processing of the full matrix of ultrasonic transmit-receive array data for non-destructive évaluation », NDT&E International 38 (2005) 701-711, évalue une technique de capture d'une matrice complète de signaux temporels entre toutes les pairs de transducteur en émission et en réception. Ces signaux temporels sont alors traités en post-traitement, par exemple par un algorithme de focalisation en chaque point du milieu.

Cependant, dans cette technique, chaque transducteur émet l'un après l'autre, les signaux en réception de tous les transducteurs sont idéalement enregistrés entre chaque tir. Ce procédé est donc insatisfaisant pour les problèmes de vitesse d'exécution.

DAVIDSEN R E ET AL: "TWO-DIMENSIONAL RANDOM ARRAYS FOR REAL TIME VOLUMETRIC IMAGING",ULTRASONIC IMAGING, DYNAMEDIA INC., SILVER SPRING, MD, US, vol. 16, no. 3, 1 juillet 1994 (1994-07-01), pages 143-153; Pieter Kruizinga ET AL: "Compressive 3D ultrasound imaging using a single sensor",Science Advances, vol. 3, no. 12, 1 décembre 2017 (2017-12-01); et RACHLIN D J ET AL: "Theoretical evaluation of some related methods for reducing acoustic speckle", 2 octobre 1988 (1988-10-02), pages 827-832 concernent aussi la technique antérieure pertinente.

**EXPOSE DE L'INVENTION**

La présente invention a pour but de perfectionner des procédés de détection de discontinuité de ce type, notamment pour améliorer la qualité de détection à grande vitesse.

A cet effet, **le procédé de détection de discontinuité** selon la revendication 1 est mis en oeuvre à l'aide d'une sonde comprenant une pluralité de transducteurs formant une surface active et adaptés pour émettre et recevoir une onde ultrasonore dans le milieu, et le procédé comprenant les étapes consistant à :

- définir une séquence d'émission dans laquelle :

   on choisit une pluralité de transducteurs émetteurs parmi les transducteurs de la sonde, chaque transducteur émetteur de la pluralité de transducteurs émetteurs ayant une position spatiale déterminée de telle sorte que les positions spatiales de la pluralité de transducteurs émetteurs sont réparties de manière uniforme et aléatoire sur la surface active de la sonde, et
   on définit pour chaque transducteur émetteur de la pluralité de transducteurs émetteurs, un décalage temporel de telle sorte que les décalages temporels de la pluralité de transducteurs émetteurs sont répartis de manière uniforme et aléatoire sur une durée d'émission prédéterminée,

- émettre la séquence d'émission dans le milieu par la pluralité de transducteurs émetteurs,
- recevoir et enregistrer des signaux en réception par la pluralité de transducteurs en réponse de la séquence d'émission émise dans le milieu,
- traiter les signaux en réception selon le processus suivant dans lequel :

   on calcule pour chaque transducteur émetteur, un retard de focalisation correspondant à une loi de focalisation déterminée pour le transducteur émetteur, pour un point cible de sondage souhaitée dans le milieu, et en tenant compte du décalage temporel du transducteur émetteur considéré,
   on calcule pour chaque transducteur émetteur, un signal focalisé qui est la somme des signaux en réception de la pluralité de transducteurs de la sonde, réalignés par le retard de focalisation,

on calcule un signal synthétique qui est la somme des signaux focalisés de tous les transducteurs émetteurs, et on analyse le signal synthétique pour en déduire un niveau de détection dans le milieu au point cible, et on en déduit la détection d'une discontinuité.

Grâce à ces dispositions, le procédé de sondage provoque peu d'interférences, et la qualité de détection est améliorée particulièrement à grande vitesse.

Notamment, ce procédé n'a besoin que d'une seule séquence en émission. La détection et/ou l'image est totalement effectuée en post traitement, et la séquence particulière et éventuellement son traitement permet d'éviter au maximum les interférences entre les signaux reçus enregistrés et/ou de réduire les effets de ces interférences, ce qui permet de fournir une détection de discontinuité rapide et précise (amplitude du niveau de détection).

Dans divers modes de réalisation du procédé selon la présente divulgation, on peut éventuellement avoir recours en outre à l'une et/ou à l'autre des dispositions suivantes.

Selon un aspect, le procédé comprend en outre avant le calcul du signal focalisé, une étape dans laquelle on réduit les interférences entre plusieurs discontinuités, par le processus consistant à :

- déterminer une courbe de maximums des signaux en réception en fonction des transducteurs, ladite courbe étant déterminée en repérant les maximums des signaux en réception pour un point cible et selon la loi de focalisation,
- calculer une courbe modèle qui approxime la courbe de maximums, et
- calculer des signaux en réception corrigés à partir des signaux en réception enregistrés et de la courbe modèle, lesdits signaux en réception corrigés étant ensuite utilisés à la place des signaux en réception enregistrés dans le traitement de ces signaux pour déduire le niveau de détection.

Selon un aspect, la courbe modèle est une courbe polynomiale.

Selon un aspect, le retard de focalisation est déterminé en fonction de la vitesse de déplacement du milieu par rapport à la sonde, ou inversement.

Selon un aspect, le traitement des signaux en réception est itéré pour une pluralité de point cibles pour établir une image du milieu représentative des différents niveaux de détection dans lesdits points cibles.

La présente divulgation se rapporte également à **un système de détection de discontinuité** selon la revendication 6 qui met en oeuvre le procédé précédent. Ce système comprend une sonde comprenant une pluralité de transducteurs adaptés pour émettre et recevoir une onde ultrasonore dans le milieu, et une unité de traitement reliée à la sonde, cette unité de traitement comprenant au moins une mémoire pour enregistrer des signaux en réception, un contrôleur pour mettre en oeuvre le procédé.

**BREVE DESCRIPTION DES DESSINS**

D'autres caractéristiques et avantages de l'invention apparaîtront au cours de la description suivante d'au moins un de ses modes de réalisation, donné à titre d'exemple non limitatif, en regard des dessins joints.

Sur les dessins :

- la figure 1 est un schéma fonctionnel général d'un exemple de système implémentant le procédé selon l'invention ;
- la figure 2 est un diagramme temporel des signaux des transducteurs émetteurs sélectionnés d'un exemple de séquence d'émission du procédé ;
- la figure 3 est un diagramme temporel des signaux en réception des transducteurs de la sonde selon le procédé ;
- la figure 4 est un diagramme temporel des signaux phasés obtenus par les retards de focalisation appliqués aux signaux en réception de la figure 3 ;
- la figure 5 est un schéma fonctionnel du bloc de sommation de la figure 1 ;
- la figure 6 est un exemple de signal focalisé obtenu par sommation des signaux phasés ;
- la figure 7 est un diagramme temporel des signaux focalisés calculés et relatifs aux transducteurs émetteurs sélectionnés ;
- la figure 8 est un exemple de tracé temporel de signal synthétique calculé par sommation des signaux focalisés de la figure 7 ;
- la figure 9 est un diagramme temporel des signaux en réception dans le cas de plusieurs discontinuités dans le milieu et d'une unique excitation par un seul transducteur émetteur ;
- la figure 10 est un exemple de tracé de courbe de maximum en fonction des transducteurs pour un point cible sur une première discontinuité.

Sur les différentes figures, les mêmes références numériques désignent des éléments identiques ou similaires.

**DESCRIPTION DETAILLEE**

Un exemple de réalisation d'un système de détection de discontinuités ou défauts d'un milieu d'un produit et un exemple d'un procédé mis en oeuvre par ce système sont décrits ci-dessous de manière illustrative et non limitative.

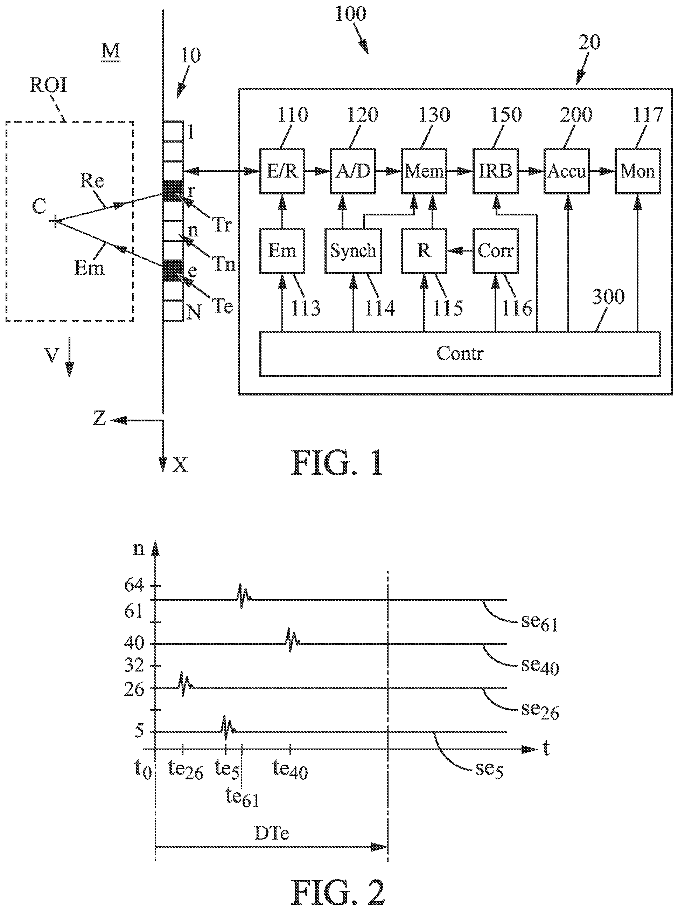

Selon cet exemple de système selon la présente divulgation et illustré en **figures 1,** le système 100 est un système de détection de discontinuité dans un milieu M. Le milieu M est par exemple un produit tel qu'une pièce métallique qui peut comporter à l'intérieur de son matériau une ou plusieurs discontinuités ou défauts, tels qu'une ou des inclusions d'air ou des fissures. Le but du système et procédé est donc de détecter ces discontinuités ou défauts. Par détection, on entend par exemple obtenir l'information de la présence d'une discontinuité, et/ou obtenir l'information de distance et/ou obtenir l'information de position par rapport au système, et/ou obtenir l'information de la forme de la discontinuité. Eventuellement, le produit correspondant au milieu M se déplace à une vitesse relative par rapport au système 100, ce qui impose une détection très rapide d'une discontinuité. Il est important de ne pas manquer une telle détection pour la fiabilité du contrôle du produit.

Le système et procédé selon la présente divulgation s'appliquent par exemple au contrôle non destructif de produits ou pièces métalliques telles que des tubes, des rails de chemins de fer. Notamment, le système et procédé est éventuellement utilisé pendant le déplacement dudit produit ou pendant le déplacement par roulage sur le rail.

La **figure 1** est un exemple de schéma bloc fonctionnel du système 100 qui présente différents blocs de traitements. Le système 100 peut éventuellement être décomposé en blocs fonctionnels différents, mais reprenant les fonctions essentielles de l'exemple du système 100 décrit ci-après.

Dans l'exemple de la figure 1, le système 100 comprend une sonde 10 qui échange des signaux avec une unité de traitement 20 reliée à la sonde par une liaison filaire électrique ou optique, ou une liaison sans fil par exemple par onde radio. Ainsi la sonde 10 peut être localisée à distance de l'unité de traitement 20. Eventuellement, la sonde 10 et l'unité de traitement 20 sont intégrés dans un seul dispositif, ou une partie des éléments (fonctions) de l'unité de traitement sont localisés dans la sonde 10.

La sonde 10 comprend par exemple une pluralité de transducteurs Tn avec un indice n=1...N, lesdits transducteurs formant une surface active de la sonde. Les N transducteurs Tn sont par exemple alignés selon une direction longitudinale X comme sur la figure 1. En pratique, le nombre N de transducteurs est par exemple compris entre quelques dizaines et quelques centaines.

Dans le cas d'une sonde linéaire à une dimension, un transducteur Tn de la sonde a une position spatiale repérée par l'abscisse $x_n$ de ce transducteur le long de la direction longitudinale X de la sonde. La direction de profondeur Z perpendiculaire à la direction longitudinale X correspond à la position en profondeur dans le milieu à partir d'une origine O placée en surface externe du milieu M, au niveau du contact entre la sonde 10 et le milieu M. L'origine O, la direction longitudinale X et la direction en profondeur Z forment un repère dans lequel on peut repérer des éléments par des coordonnées spatiales (x, z).

Eventuellement, la sonde 10 peut être une sonde courbée en arc de cercle, matricielle en forme plane de NxP transducteurs, ou matricielle en forme de tronçon de cylindre, ou tout autre forme de sonde. Le système et procédé décrits ici sera aisément adapté à une telle sonde.

Ainsi, le produit est par exemple soit statique, soit en déplacement de translation soit en déplacement de rotation par rapport à la sonde 10 du système, ou l'inverse (sonde qui se déplace par rapport au produit).

La sonde 10 est mise en contact directement ou indirectement par sa surface active avec une surface externe du milieu M. Chaque transducteur Tn de la sonde 10 est un élément adapté pour émettre une onde d'émission dans le milieu M et/ou pour recevoir une onde de retour dans le milieu en réponse de la nature du milieu. L'onde est usuellement une onde ultrasonore. Par exemple, comme représenté en figure 1, un transducteur émetteur Te d'indice e et de coordonnées $(x_e, 0)$ émet une onde d'émission Em vers un point cible C à l'intérieur du milieu, et le milieu retourne depuis ce point cible C une onde de retour Re par exemple vers un transducteur récepteur Tr d'indice r et de coordonnées $(x_r, 0)$. Une zone d'intérêt ROI pour sonder des discontinuités ou défauts dans le milieu est définie. Une telle zone d'intérêt est par exemple rectangulaire avec des côtés parallèles aux directions du repère.

Les transducteurs Tn de la sonde 10 reçoivent des signaux pour émettre l'onde d'émission et génèrent des signaux lors de la réception de l'onde de retour. Les transducteurs de la sonde 10 sont ainsi reliés à un module d'émission-réception 110 (identifié également par "E/R"). Le module d'émission-réception 110 commute vers les transducteurs soit les signaux d'émission préparés par le système dans une unité de pilotage des émetteurs 113 (identifié également par "Em" sur la figure), soit les signaux en réception provenant des transducteurs vers un ou plusieurs convertisseurs analogique-digital 120 (identifié également par "A/D" sur la figure) qui numérisent et convertissent ces signaux en réception de type analogiques en données numériques, ces données numériques étant alors enregistrés dans une ou plusieurs mémoires 130 (identifié également par "Mem" sur la figure) du système.

Des modules d'émission-réception 110 sont connus et permettent d'utiliser les transducteurs d'une sonde 10 séquentiellement soit en émission soit en réception d'onde. Ils comprennent par exemple aussi et sans y être limité :

- dans la chaine d'émission, des pulseurs d'émission qui génèrent les signaux d'émission, typiquement des impulses d'amplitude et de largeur temporelle programmable, et
- dans la chaine de réception des amplificateurs à gain programmable et filtres anti-aliasing.

Les signaux et ondes d'émission sont typiquement des impulses de courte durée. Ces impulses sont par exemple des signaux rectangulaires simples ou multiples, éventuellement d'amplitudes variables, ou des signaux modulés selon une ou plusieurs fréquences ou une combinaison de tels signaux. Les ondes et signaux de retour sont des échos en retour correspondant à ces impulses d'émission et déformés par la transmission du milieu. Par simplicité dans l'explications, nous parlerons plus généralement d'impulses pour les uns et les autres.

Comme illustré en figure 1, le système 100 comprend en outre un module de synchronisation 114 (identifié également par "Synch" sur la figure) relié aux convertisseurs analogique-digital 120 et à la mémoire 130 qui permet de déclencher les numérisations (conversions analogique-digitale) des signaux en réception en données numériques et leurs enregistrements dans la mémoire 130.

En outre, le système 100 peux comprendre optionnellement un bloc de réduction d'interférence 150 (identifié également par "IRB" sur la figure) relié à la mémoire 130, et dont la fonction est de modifier les données numériques des signaux en réception afin de supprimer ou réduire les interférences dans les signaux en réception dues à la présence de plusieurs discontinuités ou défauts dans le milieu, en corrigeant les données numériques. Ce bloc de réduction d'interférence sera décrit plus en détail dans la suite.

Le système 100 comprend alors un bloc de sommation 200 (identifié également par "Accu" sur la figure) relié au précédent bloc de mémoire 130 et/ou au bloc de réduction d'interférence 150, et qui effectue le calcul de la réponse du milieu en un ou plusieurs points cibles C, soit directement à partir des données de la mémoire 130, soit à partir de données corrigées issues du bloc de réduction d'interférences 150, soit à partir d'une combinaison des deux. Le bloc de sommation 200 fournit alors une réponse à un moniteur, écran, ou tout dispositif d'affichage 117 (identifié également par "Mon" sur la figure) pour informer l'utilisateur du système d'une ou plusieurs informations concernant des discontinuités ou défauts du milieu (présence, position, forme, image, ...). Ce bloc de sommation 200 sera décrit plus en détail dans la suite.

Le système 100 comprend un calculateur de retard 115 (identifié également par "R" sur la figure) qui détermine les retards temporels ou index de la position dans la mémoire 130 des extraits des données numériques (i.e. signaux en réception) utiles pour le ou les blocs suivants, c'est à dire le bloc de réduction d'interférence 150 et/ou le bloc de sommation 200.

Le système 100 comprend en outre optionnellement un correcteur dynamique de vitesse 116 (identifié également par "Corr" sur la figure) qui utilise une mesure de vitesse du produit mesurée par un ou plusieurs capteurs (non représentés) et relié au calculateur de retards 115 pour compenser le déplacement du produit (i.e. du milieu) pendant la propagation de l'onde d'émission Em depuis la sonde 10 vers le point cible C et pendant la propagation de l'onde de retour Re depuis le point cible C vers la sonde 10.

Enfin, un contrôleur 300 (identifié également par "Contr" sur la figure) est relié aux différents précédents blocs pour assurer un fonctionnement général. Plus particulièrement, le contrôleur 300 est relié à une unité de pilotage des émetteurs 113 pour émettre l'onde d'émission Em selon une procédure d'émission prédéterminée par l'utilisateur, au module de synchronisation 114 pour assurer la bonne acquisition de l'onde de retour Re, au calculateur de retard 115 pour assurer des combinaisons des signaux en réception adaptée à la focalisation souhaitée, au correcteur dynamique de vitesse 116, au bloc de réduction d'interférences 150 pour lui fournir des paramètres de fonctionnement de l'utilisateur, au bloc de formation de voie pour contrôler ses paramètres de calcul et de correction, et à l'écran 117 pour mettre en forme divers affichages et éléments de pilotage du système 100.

Le fonctionnement du système 100 est maintenant décrit.

Notamment, le contrôleur 300 et l'unité de pilotage 113 du système 100 selon la présente divulgation construisent une séquence d'émission d'onde d'émission Em particulière.

Selon un premier art antérieur, plusieurs transducteurs émetteurs Te génèrent chacun un impulse avec un décalage temporel prédéterminé pour que l'onde d'émission générée soit physiquement une onde focalisée vers un point cible du milieu. Ainsi, plusieurs tirs d'onde d'émission sont effectués successivement, chacun suivi de l'attente de l'onde de retour et de l'enregistrement des signaux en réception pour scanner de multiples points dans le milieu et éventuellement en construire une image. Cette technique implique donc de nombreux tirs d'onde d'émission. Cette méthode est particulièrement temporellement lente pour sonder une zone d'intérêt de grande taille ou avec une résolution spatialement précise. En outre, elle rend quasi impossible le sondage d'un produit qui se déplace à une vitesse non négligeable devant la sonde.

Selon un second art antérieur, un ou plusieurs tirs d'ondes non focalisées comme une onde plane sont utilisées pour scanner une zone d'intérêt du milieu. Le traitement des signaux de l'onde de retour permet d'obtenir des informations et de générer une image rapide de la zone d'intérêt. Mais, la qualité des images générées n'est pas de bonne qualité car l'énergie de l'onde d'émission étant très spatialement répartie, le rapport signal sur bruit est dégradé.

Selon un troisième art antérieur, un tir pour chaque transducteur de la sonde est effectué, et les signaux des ondes de retour sont enregistrés. Cette technique d'enregistrement de la matrice complète des signaux, comme utilisée dans le document « Post-processing of the full matrix of ultrasonic transmit-receive array data for non-destructive évaluation », NDT&E International 38 (2005) 701-711, conduit à un procédé de détection lent à cause des multiples tirs nécessaires.

La présente divulgation propose donc une séquence d'émission particulière dans laquelle on choisit un certain nombre de transducteurs émetteurs Te dans la sonde 10 de manière quasi-aléatoire, et/ou on décale les impulses des signaux d'émission de ces transducteurs émetteurs d'un décalage temporel te quasi-aléatoire. Ainsi, les signaux en réception auront peu de cohérence temporelle et peu de symétrie et on réduit les interférences spatiales et temporelles des signaux en réception, notamment en présence de plusieurs discontinuités dans le milieu du produit. Cela permet donc d'améliorer la qualité de la détection desdites discontinuités (informations ou image). En outre, cette séquence d'émission permet de sonder sensiblement la totalité de la zone d'intérêt ROI du milieu à l'aide d'un seul tir en émission et de l'onde de retour de ce tir. Cette technique est donc rapide et adaptée au sondage de produit se déplaçant par rapport à la sonde 10 du système par exemple à une vitesse V. Cette vitesse V est supposée sensiblement constante pendant le processus de sondage.

Cette séquence d'émission est produite par exemple selon le processus suivant :

- on choisit une pluralité de Ne transducteurs émetteurs Te parmi les N transducteurs Tn de la sonde 10, chaque transducteur émetteur de la pluralité de transducteurs émetteurs ayant une position spatiale xe déterminée de telle sorte les positions spatiales de la pluralité des transducteurs émetteurs sont réparties de manière uniforme et aléatoire sur la surface active de la sonde 10, et
- on définit pour chaque transducteur émetteur Te de la pluralité de Ne transducteurs émetteurs, un décalage temporel te de telle sorte que les décalages temporels te de la pluralité de Ne transducteurs émetteurs sont répartis de manière uniforme et aléatoire sur une durée d'émission DTe prédéterminée, correspondant à la durée maximum d'un tir dans le milieu M.

Cette séquence d'émission définit ainsi des transducteurs d'émission Te et des décalages temporels te, chacun des décalages temporels étant associé respectivement à un transducteur émetteur de la pluralité des transducteurs d'émetteurs. La séquence d'émission définit donc des émissions d'ondes (ultrasonore) pour Ne transducteurs émetteurs, à des instants temporels te par rapport à un instant initial t0 de référence pour la séquence d'émission. Chaque émission d'un transducteur émetteur Te de la séquence est un impulse de très courte durée. Ces émissions d'impulses ultrasonores sont donc réparties spatialement selon les transducteurs émetteurs et temporellement dans une durée d'émission DTe de la séquence d'émission.

Le nombre Ne de transducteurs émetteurs Te sélectionnés est de deux ou plus. De préférence, le nombre Ne de transducteurs émetteurs Te sélectionnés est supérieur ou égal à cinq ou dix, et ce nombre dépend du nombre N de transducteurs de la sonde. Ce nombre Ne de transducteurs émetteurs est inférieur au nombre de transducteurs N de la sonde.

Par exemple, le nombre Ne de transducteurs émetteurs Te sélectionnés est compris entre 0,05.N et 0,25.N, c'est à dire entre 5% et 25% des transducteurs de la sonde 10. Ainsi, dans cette plage d'utilisation des transducteurs, on peut obtenir de meilleures qualités de détection des discontinuités.

En fait, le technicien règlera la densité des transducteurs émetteurs et la densité des signaux de la séquence d'émission selon un compromis pour améliorer la qualité de détection et selon l'application.

Ces répartitions spatiales et temporelles sont dites "de manière uniforme et aléatoire", ce qui signifie que les émissions sont sensiblement bien espacées les unes des autres, mais avec des différences ou écarts aléatoires, dans la dimension spatiale et la dimension temporelle. Autrement dit, ces répartitions d'émissions ne sont pas régulièrement espacées ou périodiques dans ces deux dimensions. Ces répartitions d'émission ne sont également pas purement aléatoires, car elles sont de préférence espacées les unes des autres.

La **figure 2** illustre un exemple d'une telle séquence d'émission, pour une sonde 10 ayant 64 transducteurs pour laquelle on choisit quatre (4) transducteurs émetteurs Te. La figure 2 représente les tracés des quatre signaux d'émission des quatre transducteurs émetteurs choisis, ici, les transducteurs d'indices 5, 26, 40 et 61. Les signaux d'émission des autres transducteurs (transducteurs qui ne sont pas des transducteurs émetteurs) peuvent donc être nuls et ils ne sont donc pas représentés sur la figure 2. Nous avons donc les signaux d'émission $se_5$, $se_{26}$, $se_{40}$, et $se_{61}$. Ces signaux d'émission sont des impulses démarrant à des instants respectifs $te_5$, $te_{26}$, $te_{40}$ et $te_{61}$, ces instants étant quasialéatoires ou plutôt répartis de manière uniforme et aléatoire dans la durée d'émission DTe. De même, les indices des transducteurs émetteurs Te sont répartis de manière quasi-aléatoire parmi les indices 1...64 possibles des transducteurs de la sonde 10, ou plutôt répartis de manière uniforme et aléatoire dans les indices possibles des transducteurs.

Une première technique pour obtenir une répartition uniforme et aléatoire, selon la dimension spatiale ou temporelle, est de simplement définir une valeur aléatoire dans l'intervalle de la taille de la dimension spatiale ou temporelle ; c'est à dire :

- pour la dimension spatiale des transducteurs, une valeur aléatoire d'un indice de transducteur entre 1 et N le nombre de transducteurs de la sonde 10 ; et
- pour la dimension temporelle, une valeur aléatoire d'un instant temporel entre t0 l'instant initial pour la séquence d'émission, et (t0 + DTe) l'instant final maximum de la séquence d'émission, DTe étant la durée d'émission.

Une deuxième technique pour obtenir une répartition uniforme et aléatoire, est de diviser la dimension spatiale ou temporelle en un nombre NI d'intervalles contigus de tailles constantes et égales, et de définir une valeur aléatoire dans chacun desdits intervalles.

Cela permet d'obtenir des valeurs de la dimension spatiale ou temporelles répartis de manière plus uniforme sur cette dimension. En effet, chacun des NI intervalles de la dimension spatiale ou temporelle ne contient qu'un seul élément.

Une troisième technique pour obtenir une répartition uniforme et aléatoire, est de diviser la dimension spatiale ou temporelle en un nombre NI d'intervalles contigus de tailles constantes et égales, et de définir une valeur dans chacun desdits intervalles par rapport à une valeur médiane MI de chaque intervalle. Ainsi, la valeur est égale à la valeur médiane à laquelle on ajoute une valeur aléatoire correspondant à un écart par rapport à ladite valeur médiane. La valeur aléatoire peut prendre des valeurs positives ou négatives, et son amplitude peut être par exemple limitée à la moitié de la taille de l'intervalle.

Cela permet d'obtenir des valeurs de la dimension spatiale ou temporelles répartis de manière plus uniforme sur cette dimension. En effet, non seulement chacun des NI intervalles de la dimension spatiale ou temporelle ne contient qu'un seul élément, mais cet élément est placé autour d'une valeur centrale (qui est la valeur médiane de l'intervalle), avec un écart qui peut être piloté par l'amplitude définie.

Toutes ces techniques sont à mises en oeuvre par un technicien du domaine ayant des connaissances en mathématiques. Mais, il peut aussi utiliser d'autres techniques de répartition uniforme et aléatoire des valeurs dans l'espace spatiale et temporel.

Ainsi, le technicien saura déterminer par au moins une de ces techniques des transducteurs émetteurs Te en un nombre prédéterminé dans le nombre de transducteurs N de la sonde, et saura déterminer par au moins une de ces techniques les décalages temporels te associés à ces transducteurs émetteurs, chacun de ces décalages temporels étant répartis entre zéro et Dte (la durée d'émission). Notamment, le nombre d'intervalles NI cité ci-dessus est égale au nombre Ne prédéterminé (choisis) de transducteurs émetteurs Te.

La séquence d'émission définie selon la présente divulgation permet de réduire le nombre d'interférences entre les impulses dans les signaux en réception, et permet d'améliorer la détection de discontinuités, comme cela sera plus apparent avec les explications suivantes.

La mémoire 130 du système 100 contient les N signaux en réception sous forme de données numériques, ce qui constitue une matrice de capture complète du milieu M pour les Ne émissions des transducteurs émetteurs Te durant la séquence d'émission, ces émissions étant chacune décalée du décalage temporel te dans le tir de cette séquence d'émission.

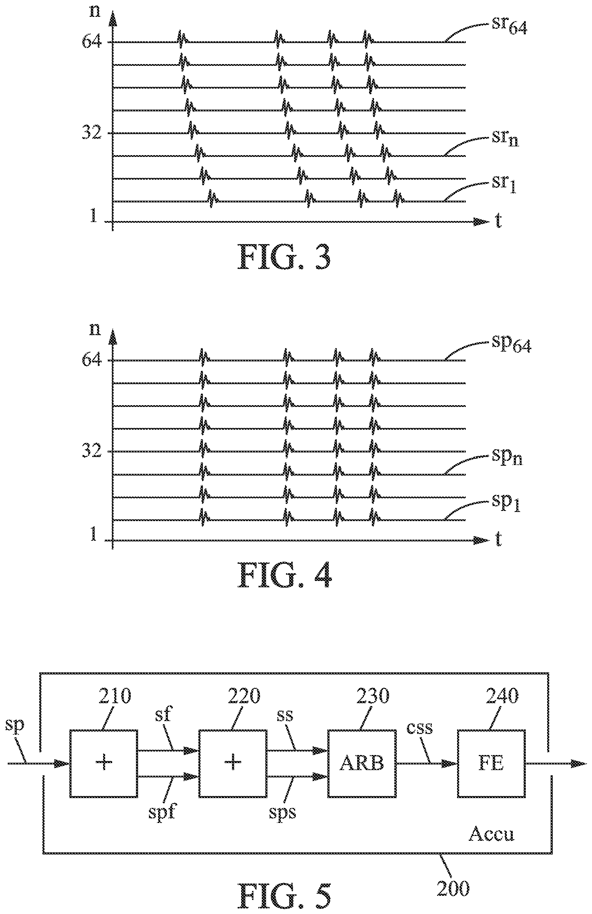

La **figure 3** représente par exemple les N signaux en réception sr obtenus et mémorisés en mémoire 130 suite aux émissions de quatre transducteurs émetteurs Te comme représenté en figure 2, en présence d'une unique discontinuité ou défaut dans le milieu M du produit. La figure 3 représente de manière simplifiée une partie des 64 signaux en réception $sr_1$ à $sr_{64}$, pour éviter une trop grande densité de tracés sur cette figure. En outre, pour aider la compréhension du lecteur, cette figure et les suivantes supposent le cas d'une sonde linéaire, ce qui simplifie la répartition des signaux.

Les maximums des impulses de ces N signaux en réception forment dans le cas présent des N transducteurs des courbes qui ne se croisent pas et correspondant aux retours des Ne impulses d'émission. Ces courbes sont des lignes courbes parallèles, c'est à dire qui sont séparées l'une de l'autre dans la direction temporelle, d'une constante qui dépend des écarts temporels à l'émission et de la position de la discontinuité dans le milieu.

Chacun de ces N signaux en réception comprend Ne impulses, correspondant aux Ne retours de l'unique discontinuité sur le transducteur en réception correspondant. Les espacements temporels de ces impulses dépendent de la distribution temporelle des Ne émissions mais aussi de la position spatiale de l'unique discontinuité dans le milieu M. Cependant, les décalages temporels entre deux signaux en réception de deux transducteurs de réception Tr ne dépendent que de la position spatiale de l'unique discontinuité dans le milieu M.

Le contrôleur 300 fait extraire des portions des N signaux en réception de la mémoire 130 pour un point cible C, un transducteur émetteur Te et un transducteur récepteur Tr, en programmant le calculateur de retard 115 avec un calcul de retard de focalisation, dénoté Retard. Ce calcul de retard de focalisation est par exemple le suivant :

$$Retard = te + tem + tre + tadj$$

dans lequel :

te est le décalage temporel de l'émission d'un transducteur émétteur,

tem est le temps du trajet aller de l'onde d'émission d'un transducteur émetteur Te vers le point cible C dans la zone d'intérêt ROI,

tre est le temps du trajet de retour de l'onde de retour du point cible C vers un transducteur quelconque de la sonde 10, et

tadj est un temps de recalage sur le maximum des signaux en réception.

Notamment, une formulation simplifiée de formation de voie pour un transducteur linéaire donnent par calcul géométrique les formules suivantes :

$$\texttt{tem = 1/Va.sqrt((xe -xc)}^2 \texttt{ + zc}^2\texttt{)}$$

$$\texttt{tre = 1/Vr.sqrt((xr -xc)}^2 \texttt{ + zc}^2\texttt{)}$$

(xe, ze), (xr, zr) et (xc, zc) étant les coordonnées dans le repère du transducteur émetteur Te, du transducteur récepteur, et du point cible C, et ze, zr étant nuls pour une sonde linéaire,

Va est la vitesse de l'onde d'émission dans le milieu pour le trajet aller entre un transducteur émetteur Te et le point cible C,

Vr est la vitesse de l'onde de retour dans le milieu pour le trajet de retour entre le point cible C et un transducteur en réception Tr, et

sqrt est la fonction mathématique racine carré.

Le retard de focalisation de la présente divulgation est un calcul de formation de voie en réception, mais il diffère d'un retard de formation de voie en réception usuel par l'ajout du décalage temporel te utilisé dans la séquence d'émission pour chaque transducteur émetteur Te.

Le calcul de retard précédent peut être exprimé en index mémoire dans la mémoire 130 en multipliant le temps de trajet aller tem, le temps de trajet de retour tre et le décalage temporel te par une fréquence d'échantillonnage Fs dans le cas d'un système échantillonné avec une telle fréquence d'échantillonnage constante.

D'autres formulations pour les calculs de retard sont possibles et accessibles au technicien du domaine. Notamment, ces formulations dépendent de la géométrie de la sonde, ce qui modifie les distances du trajet aller pour l'onde d'émission et du trajet retour pour l'onde de retour. De même, ces formulations dépendent de la prise en compte d'un milieu intermédiaire entre la sonde et le milieu du produit, ce qui modifie également les calculs de distances dans les trajets.

Il est possible de faire des calculs de retard pour une focalisation dans une direction prédéterminée. Dans ce cas, les formules de calcul du retard sont différentes. La présente description détaille et explicite le fonctionnement dans le cas d'une focalisation vers un point cible, mais il est à la portée d'un technicien d'établir les autres formules pour une focalisation directionnelle, et de construire un procédé de détection de discontinuité et un système adapté pour cet autre type de focalisation.

Le contrôleur 300 fait donc calculer au calculateur de retard 115 le retard de focalisation des N signaux en réception de la mémoire 130 pour un point cible C et un transducteur émetteur Te et un transducteur récepteur Tr et il fait extraire de la mémoire 130 des extraits de signaux correspondant à une focalisation au point cible C de la zone d'intérêt ROI. Nous appellerons ces extraits de signaux décalés temporellement du retard de focalisation, des signaux phasés en réception, généralement désignés par sp.

Si le point cible C se situe à l'emplacement d'une discontinuité, la précédente extraction des signaux phasés en réception (décalés temporellement par le retard de focalisation) auront les maximums des impulses des N transducteurs en réception Tr, remis en cohérence temporelle comme cela est représenté en **figure 4,** ce qui permettra par sommation d'obtenir un signal focalisé (correspondant à un signal A-scan d'une formation de voie de l'art antérieur) ayant une grande amplitude, ce qui signifie une détection d'une discontinuité à la localisation spatiale du point cible C.

Si le point cible C ne se situe pas à l'emplacement d'une discontinuité, les signaux phasés ne seront pas avec des maximums des impulses alignés verticalement comme sur la figure 4, et une sommation de ces signaux phasés ne formeront pas un signal focalisé avec une grande amplitude, ce qui démontre la non détection d'une discontinuité à la localisation spatiale du point cible C.

Les signaux phasés en réception de la figure 4 peuvent être calculés pour chaque transducteur émetteur Te, ayant un décalage temporel te.

La figure 4 représente donc de manière simplifiée une partie des 64 signaux phasés en réception $sp_1$ à $sp_{64}$,

toujours pour éviter une trop grande densité de tracés sur cette figure.

Ces signaux phasés en réception sp sont alors fournis soit directement au bloc de sommation 200, soit fournis au bloc de réduction d'interférence 150 (optionnel) qui corrige ces signaux avant de les fournir au bloc de sommation 200.

Nous allons donc décrire en premier le bloc de sommation 200 qui effectue le traitement des signaux phasés en réception pour détecter une discontinuité.

Le principe général est une double sommation, une première sommation des signaux phasés en réception sp selon les indices des N transducteurs récepteurs Tr pour obtenir un signal focalisé sf pour chaque excitation d'un transducteur émetteur Te (c'est à dire pour chaque décalage temporel te), puis une seconde sommation des précédents signaux focalisés sf selon les indices des Ne transducteurs émetteurs Te.

La **figure 5** est un exemple de schéma bloc fonctionnel du bloc de sommation 200 comprenant différents blocs de traitements que nous allons expliciter.

Dans l'exemple représenté, le bloc de sommation 200 comprend :

- un premier sommateur 210 effectuant la somme des N signaux phasés sp en réception pour un transducteur émetteur Te particulier pour fournir un signal focalisé sf pour ce transducteur émetteur Te,
- un second sommateur 220 effectuant la somme des Ne signaux focalisés sf pour chaque transducteur émetteur Te pour fournir un signal synthétique, et
- un bloc de filtre et détection d'enveloppe 240 pour déterminer un niveau du signal synthétique, désigné par ss.

Optionnellement, le bloc de sommation 200 comprend en outre un bloc de réduction d'artéfact 230 (noté également "ARB" sur la figure 5) qui est un bloc dont la fonction est de réduire le bruit de fond du traitement du système 100.

Selon un premier mode de réalisation, le premier sommateur 210 et le second sommateur 220 effectuent uniquement des sommes des signaux qu'ils reçoivent en entrée. Le premier sommateur 210 effectue la somme des N signaux phasés sp en réception de la figure 4 pour fournir un signal focalisé sf (pour l'ensemble des transducteurs émetteurs Te). Le second sommateur 220 effectue la somme des signaux focalisés sf en réception pour tous les Ne transducteurs émetteurs pour fournir un signal synthétique ss.

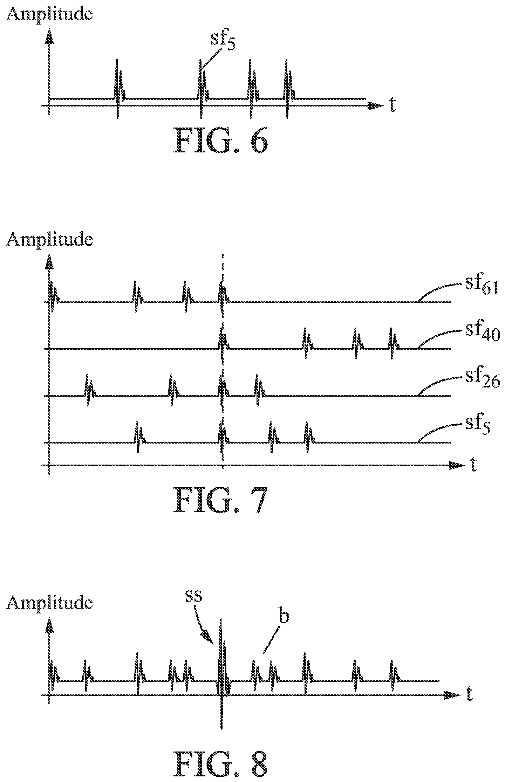

La **figure 6** montre un exemple de signal focalisé sf pour l'ensemble des transducteurs émetteurs Te.

Comme les signaux en réception, le signal focalisé sf en réception comprend les Ne impulses de retours des Ne émission dans le cas d'une unique discontinuité. Les espacements temporels de ces impulses dépendent de la distribution temporelle des Ne impulses en émissions et de la position spatiale du point cible C.

Toutefois, si le calcul de retard ne correspond pas à une focalisation sur un point cible correspondant à une discontinuité, ce signal focalisé sf aura un aspect différent avec de multiples impulses de faible amplitude mélangés et répartis temporellement.

Nous supposons donc sur cette figure 6, que les signaux phasés sp sont correctement focalisés sur une discontinuité du milieu M, et nous conserverons cette hypothèse pour la suite des illustrations par simplicité de compréhension et de représentation.

La **figure 7** montre un exemple de quatre signaux focalisés sf pour chacun des transducteurs émetteurs Te sélectionnés pour la séquence d'émission, et par exemple les transducteurs émetteurs d'indice 5, 26, 40 et 61 tel que sélectionnés précédemment, c'est à dire des signaux focalisés $sf_5$, $sf_{26}$, $sf_{40}$ et $sf_{61}$. Ces signaux focalisés sont transmis depuis la mémoire vers le bloc de sommation 200 soit en parallèle soit en série en fonction de l'implémentation matérielle choisie (par exemple de la quantité mémoire disponible sur ce matériel), le fonctionnement général étant piloté par le contrôleur 300.

Ainsi, le second sommateur 220 prend l'ensemble des Ne signaux focalisés sf de chaque émission des transducteurs émetteurs, et en fait la somme pour obtenir le signal synthétique ss de la **figure 8.**

Dans le cas d'une focalisation en un point cible C correspondant à une discontinuité, la somme des signaux focalisés obtenus pour les différents transducteurs émetteurs Te vont se sommer avec une bonne cohérence à un instant temporel de combinaison ts, pour produire un signal synthétique ss tel que celui de la figure 8.

Ce signal synthétique comprend à cet instant temporel de combinaison ts un maximum dont la valeur représente le niveau de l'onde de retour Re pour le point cible C considéré. Cependant, même dans ce cas, le signal synthétique ss est un signal comprenant une somme d'impulses qui forment un bruit de fond b dans le signal.

Selon un second mode de réalisation plus perfectionné, tel que présenté en figure 5, on effectue aussi les sommes des signaux comme explicité dans le premier mode de réalisation, mais on effectue également des calculs de phase.

Ainsi, le premier sommateur 210 effectue la somme des signaux phasés en réception pour fournir le signal focalisé, et effectue également une somme des phases de ces signaux pour fournir un signal de phase focalisée destiné à estimer à quel point les signaux phasés en réception sont "en phase" (corrélés) ou ne sont pas "en phase" (décorrélés) les uns avec les autres. Ainsi, ce premier sommateur 210 fournit un premier signal qui est le signal focalisé (signal A-scan) et un deuxième signal qui est un signal de phase focalisée.

Une façon de calculer cette somme des phases est d'effectuer la somme des signes des signaux phasés en réception. Si les signaux sont en phase, ils ont le même signe et la somme des signes prend une grande valeur absolue. Si les signaux ne sont pas correctement en phase, la somme des signes prend une valeur faible en valeur absolue. D'autres façons de calculer une somme des phases peuvent être développées par le technicien du domaine.

Le second sommateur 220 effectue premièrement la somme des signaux focalisés en réception pour tous les Ne transducteurs émetteurs pour fournir un signal synthétique.

Le second sommateur 220 de la figure 5 effectue également la somme des signaux de phase focalisée pour tous les Ne transducteurs émetteurs pour fournir un signal de phase synthétique.

Comme explicité précédemment pour le signal de phase, le signal de phase synthétique a une valeur absolue d'autant plus grande que les signaux sont en phase et donc qu'ils correspondent à une discontinuité.

Par conséquent, un bloc de réduction d'artéfact 230 placé en sortie du second sommateur 220 utilise le signal de phase synthétique pour corriger le signal synthétique, et pour améliorer son rapport signal sur bruit.

Une façon élémentaire est de multiplier le signal synthétique par la valeur absolue du signal de phase synthétique, normalisée entre zéro et un. Ainsi, l'amplitude du signal synthétique n'est pas modifiée si les signaux phasés sont "en phase" et son amplitude est réduite si les signaux phasés ne sont pas "en phase". Grâce à cette disposition, on obtient un signal synthétique avec une amplitude de grande précision avec un bruit de fond réduit.

Le technicien du domaine peut utiliser d'autres formulations, normalisations et combinaisons du signal synthétique et du signal de phase synthétique pour obtenir un signal synthétique corrigé css.

Enfin, le bloc de filtre et détection d'enveloppe 240 récupère soit le signal synthétique ss (cas du premier mode de réalisation) directement depuis le second sommateur 220, soit le signal synthétique corrigé css (cas du second mode de réalisation) depuis le bloc de réduction d'artéfact 230. Ce bloc de filtre et détection d'enveloppe 240 extrait du signal en entrée la valeur du maximum de ce signal afin de déterminer le niveau de l'onde de retour Re pour le point cible C considéré. Ce niveau permet d'estimer la présence de discontinuité à la localisation du point cible C.

Par conséquent et en résumé, le système 100 selon la présente divulgation met en oeuvre un procédé comprenant les étapes consistant à :

- définir une séquence d'émission dans laquelle :

  on choisit une pluralité de transducteurs émetteurs Te parmi les transducteurs de la sonde, chaque transducteur émetteur de la pluralité de transducteurs émetteurs ayant une position spatiale déterminée de telle sorte les positions spatiales de la pluralité de transducteurs émetteurs sont réparties de manière uniforme et aléatoire sur la surface active de la sonde, et
  on définit pour chaque transducteur émetteur Te de la pluralité de transducteurs émetteurs, un décalage temporel te de telle sorte que les décalages temporels de la pluralité de transducteurs émetteurs sont répartis de manière uniforme et aléatoire sur une durée d'émission prédéterminée,

- émettre la séquence d'émission dans le milieu par la pluralité de transducteurs émetteurs,
- recevoir et enregistrer des signaux en réception sr par la pluralité de transducteurs en réponse de la séquence d'émission émise dans le milieu,
- traiter les signaux en réception selon le processus suivant dans lequel :

  on calcule pour chaque transducteur émetteur, un retard de focalisation correspondant à une loi de focalisation déterminée pour le transducteur émetteur, pour un point cible de la zone d'intérêt de sondage souhaitée dans le milieu, et en tenant compte du décalage temporel du transducteur émetteur considéré,
  on calcule pour chaque transducteur émetteur, un signal focalisé sf qui est la somme les signaux en réception de la pluralité de transducteurs de la sonde, réalignés par le retard de focalisation,
  on calcule un signal synthétique ss qui est la somme des signaux focalisés de tous les transducteurs émetteurs, et
  on analyse le signal synthétique pour en déduire un niveau de détection dans le milieu au point cible, et on en déduit la détection d'une discontinuité.

La séquence d'émission du procédé précédent est suffisante pour que le processus de traitement des signaux en réception sr sonde le milieu du produit afin de détecter des discontinuités dans la zone d'intérêt ROI en tout point cible ou toute direction. Cette séquence d'émission est donc très efficace pour sonder rapidement le milieu, et pour éviter ou réduire les interférences dans les signaux en réception sr.

Tout le processus de traitement des signaux en réception sp de l'unité de traitement 20 est décrit ici par un découpage en bloc fonctionnels constitués au moins des calculateurs de retard 115, bloc de sommation 200, et contrôleur 300, entourés d'autres blocs fonctionnels dont certains sont optionnels, mais ce processus de traitement peut être implémenté dans une seule ou plusieurs unités de calcul selon une architecture définie par un technicien. Notamment, ce processus de traitement peut être implémenté dans un matériel dédié comme des processeurs FPGA, dans un matériel de calcul comme un processeur DSP, ou dans un processeur standard. La puissance des FPGA, DSP et microprocesseurs actuels permet des calculs extrêmement rapides.

En réitérant le processus de traitement pour une pluralité de points cibles C à partir des mêmes signaux en réception sr enregistrés après une seule séquence d'émission telle que décrite ci-dessus, il est possible de construire une image du milieu.

Ainsi, dans le procédé de détection de discontinuité, l'étape de traitement des signaux en réception est itérée pour une pluralité de point cibles, afin d'établir une image du milieu représentative des différents niveaux de détection.

Comme ce processus de traitement des signaux en réception n'est que du calcul, ce processus peut être extrêmement rapide. Le balayage du milieu M du produit pour détecter des discontinuités peut être très rapide, ce qui permet de sonder rapidement un produit. Par exemple, il devient possible de sonder un produit qui se déplace par rapport à la sonde ou inversement.

Nous allons maintenant expliciter le fonctionnement du bloc de réduction d'interférence 150 (dit "IRB") du système 100 de la figure 1. Ce bloc de réduction d'interférence 150 a notamment pour objet de réduire les interférences pouvant arriver lorsque plusieurs discontinuités se trouvent dans la zone d'intérêt ROI du milieu M. Nous considérons que le nombre de discontinuités dans le milieu est Nd.

Pour simplifier les explications, nous supposerons dans cette partie que la séquence d'excitation ne comprend qu'une seule émission d'un pulse par un seul transducteur émetteur Te (Ne = 1), mais trois discontinuités à l'intérieur du milieu (Nd = 3).

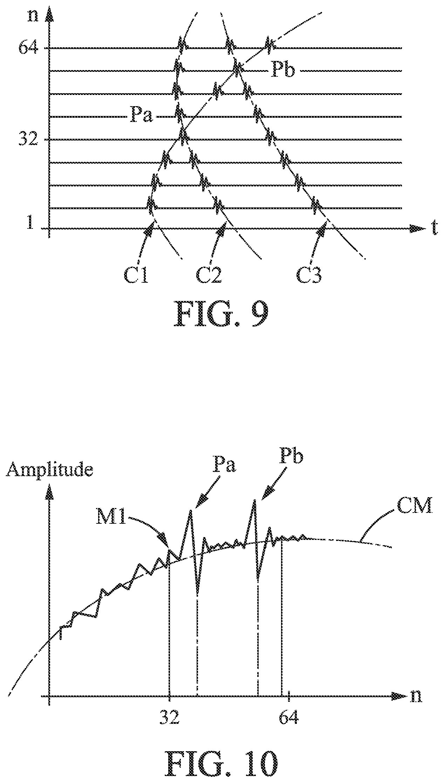

Ainsi, dans ce cas, la **figure 9** (similaire à la figure 3) représente les N signaux en réception sr obtenus et mémorisés en mémoire 130 suite à l'émission d'un seul transducteurs émetteurs Te, en présence des trois discontinuités dans le milieu M du produit. La figure 9 représente de manière simplifiée une partie des 64 signaux en réception $sr_1$ à $sr_{64}$, pour éviter une trop grande densité de tracés sur cette figure.

On observe sur cette figure, pour chaque transducteur récepteur Tr, un signal en réception sr contenant trois impulsions correspondant aux trois retours des trois discontinuités. Chaque discontinuité a une position spatiale différente dans le milieu, ce qui se traduit en figure 9 par 3 courbes de maximums d'impulsions dans la direction des N transducteurs (une pour chaque discontinuité) : courbes C1, C2 et C3. Contrairement aux courbes pour plusieurs émissions d'impulses de la figure 3, ces courbes peuvent se croiser ce qui produit des interférences aux points de croisements Pa et Pb de la figure 9.

Bien sûr, on comprendra que lorsqu'il y a plusieurs impulsions en émission (Ne), cela multiplie le nombre de croisements et d'interférences entre les diverses courbes.

Ainsi, si l'on extrait les portions de signaux autour de la courbe C1 par le procédé de calcul de retard explicité précédemment, on peut tracer pour le point cible C focalisé sur la discontinuité correspondant à cette courbe C1, une courbe de maximums M1 passant en moyenne par tous les maximum de la courbe C1 ou plutôt utilisant les valeurs des signaux en réception sr pris aux instants correspondant à la loi de retard en réception (le calcul de retard) pour le point cible C sur la première discontinuité.

Cette courbe de maximums M1 présente notamment des interférences autour des indices de transducteurs correspondant aux points de croisements Pa et Pb.

Cette courbe de maximums M1 est liée à la forme et à la taille de la discontinuité.

Il est alors possible de calculer une courbe modèle CM qui approxime la courbe de maximums M1 par une équation mathématique, telle qu'une équation polynomiale. Des techniques d'approximation de courbes expérimentales de type régression polynomiales sont bien connues.

Ainsi, on détermine la courbe modèle CM la plus proche de la courbe de maximums M1, la courbe modèle étant une courbe calculée par une équation polynomiale, et on calcule des signaux en réception csr corrigés à partir de la courbe modèle CM, ce qui permet de réduire significativement les interférences.

L'équation polynomiale est par exemple une équation polynomiale d'ordre un (une droite), d'ordre deux (parabole) ou d'ordre trois.

La détermination de la courbe la plus proche peut être effectué en minimisant une distance entre la courbe modèle CM et la courbe de maximums M1.

Ainsi, en résumé le procédé de détection de discontinuité est complété avant le calcul du signal focalisé, une étape mise en oeuvre par exemple par le bloc de réduction d'interférences et durant laquelle on réduit les interférences entre plusieurs discontinuités, par le processus consistant à :

- déterminer une courbe de maximums des signaux en réception en fonction des transducteurs, ladite courbe étant déterminée en repérant les maximums des signaux en réception pour un point cible et selon la loi de focalisation,
- calculer une courbe modèle qui approxime la courbe de maximums, et
- calculer des signaux en réception corrigés à partir des signaux en réception enregistrés et de la courbe modèle, lesdits signaux en réception corrigés étant ensuite utilisés à la place des signaux en réception enregistrés dans le traitement de ces signaux pour déduire le niveau de détection.

Nous allons maintenant expliciter le fonctionnement du correcteur dynamique de vitesse 116 (identifié "Corr" sur la figure 1). Ce correcteur dynamique de vitesse 116 a notamment pour objet de corriger le calcul de retard dans le cas d'un déplacement de la sonde 10 par rapport au produit (milieu M) ou inversement. Nous traitons ici le cas d'un déplacement à vitesse constante dans la direction longitudinale X. C'est un cas très usuel pour le contrôle en continu de profilés métalliques ou par exemple de rails de chemin de fer. La vitesse peut donc être très importante (plusieurs dizaines de kilomètres par heure). Sans correction du calcul de retard, l'estimation du niveau de détection est complètement erronée, et dans le cas d'un calcul d'image, l'image résultante est totalement floue.

Par exemple, dans le cas du calcul de retard détaillé précédemment, le calcul de retard de focalisation corrigé est alors toujours :

$$\texttt{Retard = te + tem + tre + tadj}$$

Mais, les temps de trajet aller tem et le temps de trajet de retour tre sont maintenant:

$$\texttt{tem = 1/Va.sqrt(((xe +dxm) - xc)}^2 \texttt{ + zc}^2\texttt{)}$$

$$\texttt{tre = 1/Vr.sqrt(((xr + drm + drA + drR) -xc)}^2 \texttt{ + zc}^2\texttt{)}$$

dans lequel

dxm est le déplacement du transducteur émetteur Te pendant le décalage temporel te de ce transducteur émetteur,
drm est le déplacement du transducteur récepteur Tr pendant le décalage temporel te du transducteur émetteur Te,
drA est le déplacement du transducteur récepteur Tr pendant le trajet aller de l'onde entre le transducteur émetteur Te et le point cible C,
drR est le déplacement du transducteur récepteur Tr pendant le trajet retour de l'onde entre le point cible C et le transducteur récepteur Tr.

Le retard de focalisation ci-dessus est donc maintenant fonction de déplacements dxm, drm, drA, drR qui peuvent être aisément calculés à partir de la vitesse de déplacement du produit par rapport à la sonde 10.

Le calcul de retard précédent peut être exprimé en index mémoire dans la mémoire 130 en multipliant le temps de trajet aller tem, le temps de trajet de retour tre et le décalage temporel te par une fréquence d'échantillonnage Fs dans le cas d'un système échantillonné avec une telle fréquence d'échantillonnage constante.

Ainsi, le système 100 récupère d'un autre système une mesure de vitesse de la vitesse du milieu par rapport à la sonde, ou comprend un capteur pour mesurer cette vitesse. Cette vitesse est fournie au correcteur dynamique de vitesse 116 qui corrige le calculateur de retard 115, par exemple avec les formules explicitées ci-dessus.

Le procédé de détection de discontinuité est alors amélioré par le fait que le retard de focalisation est déterminé en fonction de la vitesse de déplacement du milieu par rapport à la sonde, ou inversement.

## Revendications

1. **Procédé de détection de discontinuités dans un milieu,** ce procédé étant mis en oeuvre à l'aide d'une sonde comprenant une pluralité de transducteurs formant une surface active et adaptés pour émettre et recevoir une onde ultrasonore dans le milieu, et le procédé comprenant les étapes consistant à :

   - définir une séquence d'émission dans laquelle :

      on choisit une pluralité de transducteurs émetteurs parmi les transducteurs de la sonde, chaque transducteur émetteur de la pluralité de transducteurs émetteurs ayant une position spatiale déterminée de telle sorte que les positions spatiales de la pluralité de transducteurs émetteurs sont réparties de manière uniforme et aléatoire sur la surface active de la sonde, et
      on définit pour chaque transducteur émetteur de la pluralité de transducteurs émetteurs, un décalage temporel de telle sorte que les décalages temporels de la pluralité de transducteurs émetteurs sont répartis de manière uniforme et aléatoire sur une durée d'émission prédéterminée,

- émettre la séquence d'émission dans le milieu par la pluralité de transducteurs émetteurs,
- recevoir et enregistrer des signaux en réception par la pluralité de transducteurs en réponse de la séquence d'émission émise dans le milieu,
- traiter les signaux en réception selon le processus suivant dans lequel :

on calcule pour chaque transducteur émetteur, un retard de focalisation correspondant à une loi de focalisation déterminée pour le transducteur émetteur, pour un point cible de sondage souhaitée dans le milieu, et en tenant compte du décalage temporel du transducteur émetteur considéré,

on calcule pour chaque transducteur émetteur, un signal focalisé qui est la somme des signaux en réception de la pluralité de transducteurs de la sonde, réalignés par le retard de focalisation,

on calcule un signal synthétique qui est la somme des signaux focalisés de tous les transducteurs émetteurs, et

on analyse le signal synthétique pour en déduire un niveau de détection dans le milieu au point cible, et on en déduit la détection d'une discontinuité.

2. Procédé selon la revendication 1, comprenant en outre avant le calcul du signal focalisé, une étape dans laquelle on réduit les interférences entre plusieurs discontinuités, par le processus consistant à :

- déterminer une courbe de maximums des signaux en réception en fonction des transducteurs, ladite courbe étant déterminée en repérant les maximums des signaux en réception pour un point cible et selon la loi de focalisation,
- calculer une courbe modèle qui approxime la courbe de maximums, et
- calculer des signaux en réception corrigés à partir des signaux en réception enregistrés et de la courbe modèle, lesdits signaux en réception corrigés étant ensuite utilisés à la place des signaux en réception enregistrés dans le traitement de ces signaux pour déduire le niveau de détection.

3. Procédé selon la revendication 2, dans lequel la courbe modèle est une courbe polynomiale.

4. Procédé selon l'une des revendications 1 à 3, dans lequel le retard de focalisation est déterminé en fonction de la vitesse de déplacement du milieu par rapport à la sonde, ou inversement.

5. Procécé selon la revendication 1, dans lequel le traitement des signaux en réception est itéré pour une pluralité de point cibles, pour établir une image du milieu représentative des différents niveaux de détection dans lesdits points cibles.

6. **Système de détection de discontinuité dans un milieu,** comprenant une sonde (10) comprenant une pluralité de transducteurs adaptés pour émettre et recevoir une onde ultrasonore dans le milieu, et une unité de traitement (20) reliée à la sonde, cette unité de traitement (20) comprenant au moins une mémoire (130) pour enregistrer des signaux en réception, et un contrôleur (300) pour mettre en oeuvre le procédé selon l'une des revendication 1 à 5.

**Patentansprüche**

1. **Verfahren zur Detektion von Diskontinuitäten in einem Medium,** wobei dieses Verfahren mit Hilfe einer Sonde durchgeführt wird, die eine Mehrzahl von Wandlern umfasst, die eine aktive Oberfläche bilden und dazu ausgebildet sind, eine Ultraschallwelle in das Medium zu senden und zu empfangen, und wobei das Verfahren die folgenden Schritte umfasst:

- Definieren einer Sendesequenz, wobei:

eine Mehrzahl von Sendewandlern aus den Wandlern der Sonde gewählt wird, wobei jeder Sendewandler der Mehrzahl von Sendewandlern eine bestimmte räumliche Position hat, so dass die räumlichen Positionen der Mehrzahl von Sendewandlern gleichmäßig und zufällig über die aktive Oberfläche der Sonde verteilt werden, und

ein Zeitversatz für jeden Sendewandler der Mehrzahl von Sendewandlern definiert wird, so dass die Zeitversätze der Mehrzahl von Sendewandlern gleichmäßig und zufällig über eine vorbestimmte Sendedauer

verteil werden,

- Senden der Sendefolge in das Medium durch die Mehrzahl von Sendewandlern,
- Empfangen und Aufzeichnen von Empfangssignalen durch die Mehrzahl der Wandler als Reaktion auf die in das Medium gesendete Sendefolge,
- Verarbeiten der Empfangssignale gemäß dem folgenden Verfahren, wobei:

für jeden Sendewandler eine Fokussierungsverzögerung berechnet wird, die einem für den Sendewandler bestimmten Fokussierungsgesetz, für einen gewünschten Sondierungszielpunkt in dem Medium und unter Berücksichtigung der Zeitversatzes des betrachteten Sendewandlers entspricht,
wobei für jeden Sendewandler ein fokussiertes Signal berechnet wird, das die Summe der Empfangssignale der Mehrzahl der Wandler der Sonde ist, die durch die Fokussierungsverzögerung neu ausgerichtet werden,
wobei ein synthetisches Signal berechnet wird, das die Summe der fokussierten Signale aller Sendewandler ist, und
wobei das synthetische Signal analysiert wird, um daraus ein Detektionsniveau in dem Medium an dem Zielpunkt abzuleiten, und wobei daraus die Detektion einer Diskontinuität abgeleitet wird.

2. Verfahren nach Anspruch 1, welches ferner vor der Berechnung des fokussierten Signals einen Schritt umfasst, bei dem die Interferenzen zwischen mehreren Diskontinuitäten durch den folgenden Prozess reduziert werden:

- Bestimmen einer Kurve der Maxima der Empfangssignale in Abhängigkeit von den Wandlern, wobei die Kurve durch Erfassen der Maxima der Empfangssignale für einen Zielpunkt und gemäß dem Fokussierungsgesetz bestimmt wird,
- Berechnen einer Modellkurve, die sich der Kurve der Maxima annähert, und
- Berechnen korrigierter Empfangssignale aus den aufgezeichneten Empfangssignalen und der Modellkurve, wobei die korrigierten Empfangssignale dann anstelle der aufgezeichneten Empfangssignale bei der Verarbeitung dieser Signale verwendet werden, um das Detektionsniveau abzuleiten.

3. Verfahren nach Anspruch 2, wobei die Modellkurve eine polynomiale Kurve ist.

4. Verfahren nach einem der Ansprüche 1 bis 3, wobei die Fokussierungsverzögerung in Abhängigkeit von der Geschwindigkeit bestimmt wird, mit der sich das Medium relativ zur Sonde bewegt, oder umgekehrt.

5. Verfahren nach Anspruch 1, wobei die Verarbeitung der Empfangssignale für eine Mehrzahl von Zielpunkten iteriert wird, um ein Bild des Mediums zu erstellen, das für die verschiedenen Detektionsniveaus in den Zielpunkten repräsentativ ist.

6. **System zur Erkennung von Diskontinuitäten in einem Medium,** umfassend eine Sonde (10), die eine Mehrzahl von Wandlern umfasst, die dazu ausgebildet sind, eine Ultraschallwelle in das Medium zu senden und zu empfangen, und eine Verarbeitungseinheit (20), die mit der Sonde verbunden ist, wobei die Verarbeitungseinheit (20) wenigstens einen Speicher (130) zum Speichern von Empfangssignalen und eine Steuereinheit (300) zum Ausführen des Verfahrens nach einem der Ansprüche 1 bis 5 umfasst.

**Claims**

1. **Method for detecting discontinuities in a medium,** this method being implemented using a probe comprising a plurality of transducers forming an active surface and able to transmit and receive an ultrasonic wave in the medium, and the method comprising the steps of:

- defining a transmission sequence wherein:

a plurality of transmit transducers are chosen among the transducers of the probe, each transmit transducer of the plurality of transmit transducers having a determined spatial position such that the spatial positions of the plurality of transmit transducers are uniformly and randomly distributed over the active surface of the probe, and
a time offset is defined for each transmit transducer of the plurality of transmit transducers, such that the time offsets of the plurality of transmit transducers are uniformly and randomly distributed over a predetermined transmission duration,

- transmitting the transmission sequence in the medium, by the plurality of transmit transducers,
- receiving and recording reception signals, by the plurality of transducers, in response to the transmission sequence transmitted in the medium,
- processing the reception signals according to the following process, wherein:

for each transmit transducer, a focusing delay corresponding to a determined focal law for the transmit transducer is calculated, for a desired target point to be probed in the medium, and taking into account the time offset of the transmit transducer considered,
a focused signal is calculated for each transmit transducer, which is the sum of the reception signals of the plurality of transducers of the probe, realigned by the focusing delay,
a synthetic signal is calculated which is the sum of the focused signals from all the transmit transducers, and the synthetic signal is analyzed in order to thus derive a level of detection in the medium at the target point, and detection of a discontinuity is thus derived.

2. Method according to claim 1, further comprising, before the calculation of the focused signal, a step in which the interference between several discontinuities is reduced, by the process consisting of:

- determining a curve of peaks in the reception signals as a function of the transducers, said curve being determined by identifying the peaks in the reception signals for a target point and according to the focal law,
- calculating a model curve which approximates the curve of peaks, and
- calculating corrected reception signals from the recorded reception signals and the model curve, said corrected reception signals then being used instead of the recorded reception signals in the processing of these signals to derive the level of detection.

3. Method according to claim 2, wherein the model curve is a polynomial curve.

4. Method according to one of claims 1 to 3, wherein the focusing delay is determined as a function of the speed of movement of the medium relative to the probe, or vice versa.

5. Method according to claim 1, wherein the processing of the reception signals is iterated for a plurality of target points, in order to establish an image of the medium that is representative of the different levels of detection in said target points.

6. **System for detecting discontinuities in a medium,** comprising a probe (10) comprising a plurality of transducers able to transmit and receive an ultrasonic wave in the medium, and a processing unit (20) connected to the probe, this processing unit (20) comprising at least one memory (130) for storing reception signals, and a controller (300) for implementing the method according to one of claims 1 to 5.

FIG. 1

FIG. 2

FIG. 3

FIG. 4

FIG. 5

Amplitude

sf$_5$

t

FIG. 6

Amplitude

sf$_{61}$

sf$_{40}$

sf$_{26}$

sf$_5$

t

FIG. 7

Amplitude

ss

b

t

FIG. 8

FIG. 9

FIG. 10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- FR 2830328

### Littérature non-brevet citée dans la description

- Post-processing of the full matrix of ultrasonic transmit-receive array data for non-destructive évaluation. *NDT&E International,* 2005, vol. 38, 701-711
- **DAVIDSEN R E et al.** TWO-DIMENSIONAL RANDOM ARRAYS FOR REAL TIME VOLUMETRIC IMAGING'',ULTRASONIC IMAGING, DYNAMEDIA INC. SILVER SPRING, 01 Juillet 1994, vol. 16, 143-153

- **PIETER KRUIZINGA et al.** Compressive 3D ultrasound imaging using a single sensor. *Science Advances,* 01 Décembre 2017, vol. 3 (12
- **RACHLIN D J et al.** *Theoretical evaluation of some related methods for reducing acoustic speckle,* 02 Octobre 1988, 827-832